# EUROPEAN PATENT APPLICATION

(11) **EP 1 133 187 A1**
(43) Date of publication of application: **12.09.2001**
(21) Application number: 01300039.3
(22) Date of filing: 04.01.2001
(51) Int. Cl.: H04N 7/173

(54) **Broadcast data system and apparatus**

(30) Priority: 13.01.2000 GB 0000584
(71) Applicant: Pace Micro Technology PLC, Shipley, West Yorkshire BD18 3LF (GB)
(72) Inventor: Longhorn, Darren J., Farsley, Leeds LS28 6BQ (GB); Robson, Glenn, Headingley, Leeds LS6 2AY (GB)
(74) Representative: Wood, Graham

(57) **Abstract**

The invention relates to the provision of data held in the form of an information table at a broadcast data receiver and which information table holds information relating to video on demand data which can be selectively transmitted to the receiver from the broadcaster. The invention is of particular use with a DVD digital data broadcast system and the invention can be used as an adjunct to this system allowing differentiation between the conventional information tables for conventional subscription and non-video on demand systems and, in accordance with the invention, to provide information tables so as to distinguish services relating to video on demand data to allow the processing of said data.

## Description

The invention which is the subject of this application relates to the provision of data which is broadcast from a particular location, received by a plurality of receivers at various locations and processed by said receivers to allows video and /or audio displays via apparatus such as television sets connected to or provided with said data receivers.

The invention is particularly related to the provision of digital data broadcast data systems which is increasingly popular and, it is believed, will for eventually be the form in which all broadcast data relating to "television" programmes will be transmitted. The advent of digital data transmission and reception via satellite cable or terrestrial systems allows a large number of television channels to be received and selected by the user. Typically each channel comprises a series of data streams which are assembled by the receiver in accordance with information tables provided in the receiver and by processing and combining said data, the television channel programmes can be selected and displayed. A further result of this process is the ability for Video on Demand (VOD) to be provided to the user. This allows the user to view, typically from an Electronic Programme Guide which is assembled from broadcast data and then displayed on screen, a series of "selectable programmes" typically movies or special events such as sports events, concerts or the like which can be viewed by the user as they wish. Typically these selectable programmes can be selected by the user agreeing to pay a premium price to gain access to the same and when the user's apparatus sends a signal to the broadcast controller to indicate that the selection has been made, then the special programme or video on demand data is transmitted at the set time.

However, as the VOD data is not always stored in the memory of the receiver and there is no standard defined for the transmission of the data there is a need for the receiver apparatus to be able to deal with this newly and selectively broadcast data as and when it is received. In order to do this there is a need, not currently met, to convey additional information to the receiver which describes and defines the various assets of the VOD data which are available fro viewing.

The aim of the present invention is to provide a system whereby, if VOD data is transmitted the associated and necessary information relating to the assets of the selected OD can be received by the receiver apparatus in a manner and form which allows the receiver to be able to process the VOD data as and when it is received.

In a first aspect of the invention there is provided a system for use with broadcast data where at least a proportion of said data is selectively broadcast following a user selection using a Video on Demand (VOD) system and wherein information relating to the assets of the VOD data is provided at the receiver for said VOD data in the form of at least one information table which is referred to by the receiver apparatus in the processing of the said data to allow the display of the selected material to the user.

In one embodiment the assets of the VOD data are set out in two tables of information in the receiver, the first being an Asset Availability Table (AAT) which specifies to the receiver processing the VOD data the assets which may be viewed on the network to which the user is a subscriber. The second information table is an Asset Information Table (AIT) and this provides to the receiver information which defines and relates to those VOD assets which are indicated in the AAT as being available.

Preferably the data for the tables is provided within the receiver memory and/or may be transmitted at intervals to the receiver, if necessary to update the information held.

It is envisaged that the system defined herein is of particular relevance when used in conjunction with the DVB digital data broadcast international specification and is a system which can be used as an adjunct to the DVB system allowing differentiation between the conventional information tables for conventional subscription and Non Video on Demand (NVOD) systems and it may be necessary to add a new command into the existing information tables so as to distinguish services which relate to VOD data.

In a further aspect of the invention the there is provided a format for the broadcast of data which can be received by a broadcast data receiver and selectively processed to allow the generation of video and/or audio for viewing and/or listening by a user of the apparatus, said format allowing the description and allocation of assets relating to data known as VOD data and wherein the information relating to the assets of identifiable portions of the broadcast data is held in memory at the Broadcast Data Receiver with at least some of the data having been received along with the broadcast data and separated from the same and stored by the receiver for subsequent reference.

In one embodiment the asset data is stored in two information groups, a first group identifying which portions of the broadcast data is accessible for viewing and/or listening by a user in accordance with specific access controls for the specified user and a second group identifying assets of eth accessible data.

In one embodiment the asset data is transmitted to the Broadcast Data receiver as an extension to the transmission of data for DVB(Digital Video Broadcast) Service Information.

Specific examples of the utilisation of the system in accordance with the invention are now described with reference to the accompanying figures as follows.

These examples follow the form and syntax of EN 300 468 and ETR 211 and in a preferred utilisation will be an extension to the information carried in those documents.

Preferably existing DVB service information tables SI ( NIT/SDT) shall be used to list the services allocated to VOD data and it is necessary to extend existing functionality to distinguish between these services and existing subscription and NVOD services.

Services which are allocated to VOD are present in both the NIT and the SDT. The services are distinguished from other services by adding a new entry to the service_type field of the service_descriptor and the service_list_descriptor. This field is defined in Table 61: Service type coding, section 6.2.24 of EN300 468.

To identify a service_type as a VOD service, a value of 0x80 is used which enables the user interface software in the IRD to prevent the presentation of services which are reserved for VOD being normally presented to the user.

Preferably, no modification to the existing MPEG2 level PSI tables will be required to support VOD functionality. Existing PA Tables (PAT) & PM Tables (PMT) shall be used to locate a given service/program stream within a given transport stream and elementary streams within that service/program stream.

In accordance with the system of the invention a first information table, referred to as an Asset Availability Table (AAT) is provided.

The AAT specifies which VOD assets may be viewed on networks of a given network_id value. This is particularly useful on those networks which use the network id for regional distinction purposes. It can therefore be used to restrict presentation of particular assets in particular regions.

The AAT may be segmented into asset_availability_sections using the syntax given below. Any sections forming part of the AAT are transmitted in TS packets with a PID value of 0x20. All AAT sections shall take a table_id value of 0x90.

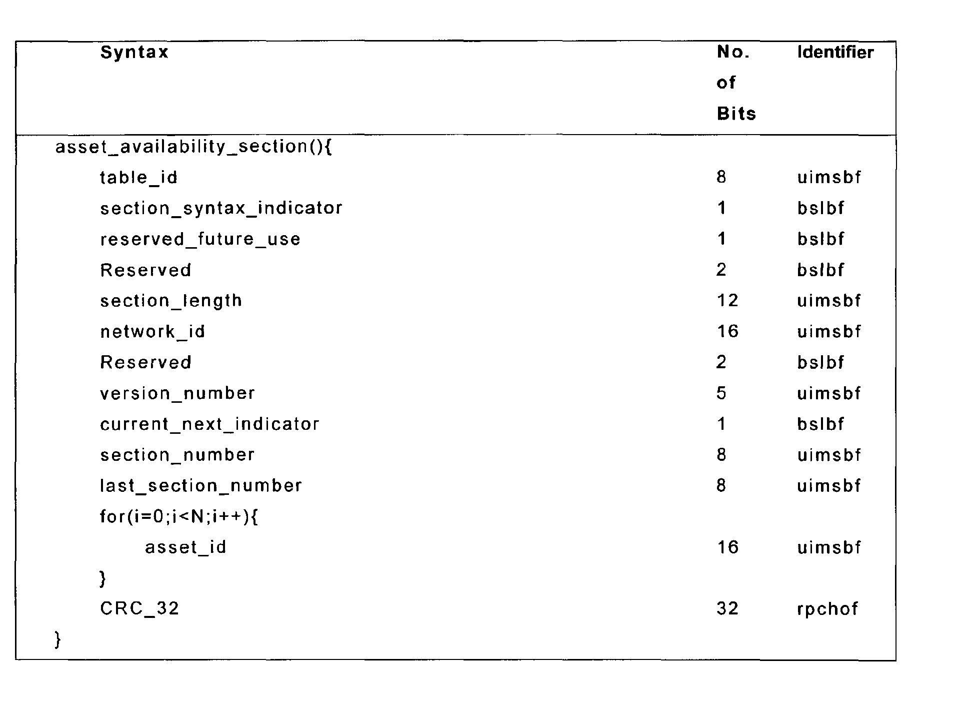

Semantics for the asset availability section:
**table_id:** 0x90.
**section_syntax_indicator:** The section_syntax_indicator is a 1-bit field which shall be set to "1".
**section length:** This is a 12-bit field. It specifies the number of bytes of the section, starting immediately following the section_length field and including the CRC. The section_length shall not exceed 4 093 so that the entire section has a maximum length of 4 096 bytes.
**network_id:** This is a 16-bit field which describes the network for which the listed assets are available.
**version_number:** This 5-bit field is the version number of the sub_table. The version_number shall be incremented by 1 when a change in the information carried within the sub_table occurs. When it reaches value 31, it wraps around to 0. When the current_next_indicator is set to "1", then the version_number shall be that of the currently applicable sub_table. When the current_next_indicator is set to "0", then the version_number shall be that of the next applicable sub_table.
**current_next_indicator:** This 1-bit indicator, when set to "1" indicates that the sub_table is the currently applicable sub_table. When the bit is set to "0", it indicates that the sub_table sent is not yet applicable and shall be the next sub_table to be valid.
section_number: This 8-bit field gives the number of the section. The section_number of the first section in the sub_table shall be "0x00". The section_number shall be incremented by 1 with each additional section with the same table_id, network_id, and original_network_id.
**last_section_number:** This 8-bit field specifies the number of the last section (that is, the section with the highest section_number) of the sub_table of which this section is part.
**asset_id:** This 16-bit field contains the identification number of an asset (uniquely allocated) which may be viewed on the network specified by the network_id field.
**CRC_32:** This is a 32-bit field that contains the CRC value that gives a zero output of the registers in the decoder defined in annex B after processing the entire private section.

A second table of information is provided as part of the system of the invention and said table is referred to as the Asset Information Table (AIT) and provides information describing the available VOD assets.

The AIT is segmented into asset_information_sections using the syntax given below. Any sections forming part of the AIT are transmitted in TS packets with a PID value of 0x20. All AIT sections shall take a table_id value of 0x91.

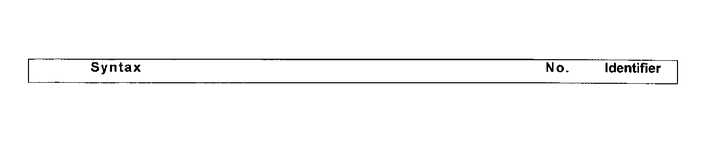

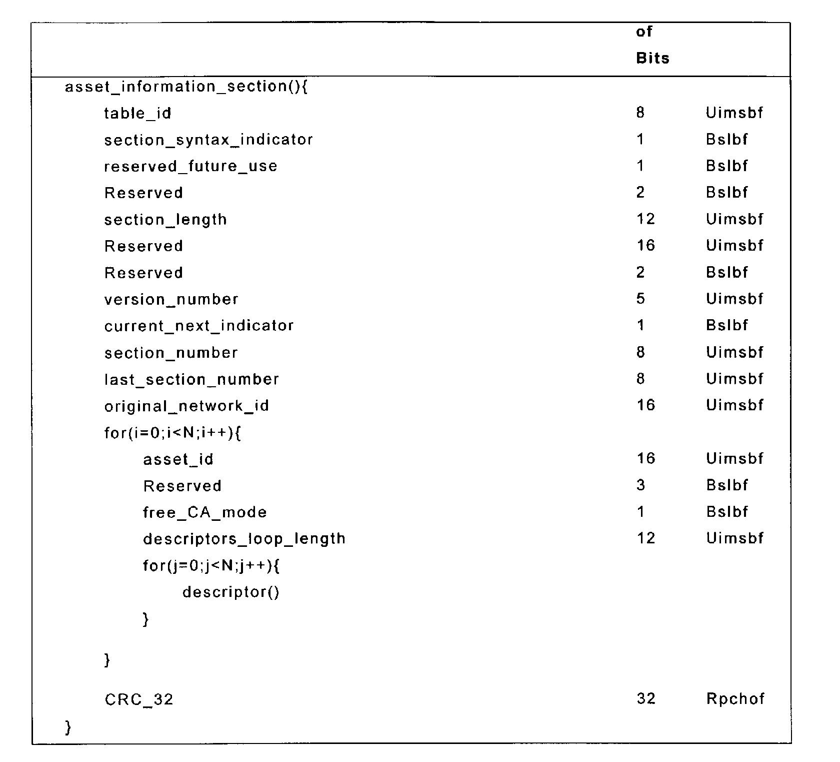

Semantics for the asset information section:
**table_id: 0x91.**
**section_syntax_indicator:** The section_syntax_indicator is a 1-bit field which shall be set to "1".
**section_length:** This is a 12-bit field. It specifies the number of bytes of the section, starting immediately following the section_length field and including the CRC. The section_length shall not exceed 4 093 so that the entire section has a maximum length of 4 096 bytes.
version_number: This 5-bit field is the version number of the sub_table. The version_number shall be incremented by 1 when a change in the information carried within the sub_table occurs. When it reaches value 31, it wraps around to 0. When the current_next_indicator is set to "1", then the version_number shall be that of the currently applicable sub_table. When the current_next_indicator is set to "0", then the version_number shall be that of the next applicable sub_table.
**current_next_indicator:** This 1-bit indicator, when set to "1" indicates that the sub_table is the currently applicable sub_table. When the bit is set to "0", it indicates that the sub_table sent is not yet applicable and shall be the next sub_table to be valid.
**section_number:** This 8-bit field gives the number of the section. The section_number of the first section in the sub_table shall be "0x00". The section_number shall be incremented by 1 with each additional section with the same table_id, and original_network_id.
**last_section_number:** This 8-bit field specifies the number of the last section (that is, the section with the highest section_number) of the sub_table of which this section is part.
**original_network_id:** This 16-bit field gives the label identifying the network_id of the originating delivery system.
**asset_id:** This 16-bit field contains the identification number of the described asset (uniquely allocated).
**free_CA_mode:** This 1-bit field, when set to "0" indicates that all the component streams of the asset are not scrambled. When set to "1" it indicates that access to one or more streams may be controlled by a CA system.
**descriptors_loop_length:** This 12-bit field gives the total length in bytes of the following descriptors.
**CRC_32:** This is a 32-bit field that contains the CRC value that gives a zero output of the registers in the decoder defined in annex B after processing the entire private section.

Preferably, the AIT includes a series of descriptors and preferably these are broadly similar to those carried in the EIT so that the AIT is organized as follows:

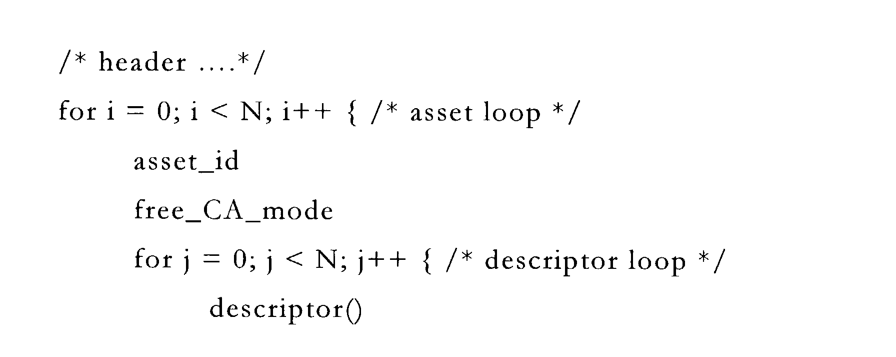

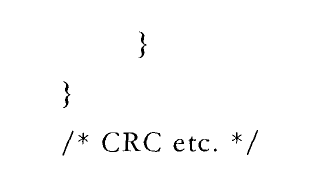

The AIT has a loop for descriptors for each asset described in the AIT and only the DVB SI descriptors in this subclause have a defined meaning in the loop.

The DVB SI descriptors that may be carried in the loop are:

### CA descriptor

If an asset is generally CA-protected, this descriptor may be used to transmit data of the CA-system. The CA_identifier_descriptor is not involved in any CA control function, it is an indication for the user interface software in the IRD that an asset is under conditional access and which CA-system is used. Then the user interface software may decide whether the asset is reachable or not. The aim of the transmission of this descriptor is to avoid frustration to users caused by assets being displayed for selection that are not reachable.

This descriptor is allowed only once in the loop. Transmission of this descriptor is optional in the AIT. In the context of the AIT, this descriptor applies to VOD assets. Where the term 'service' is used by DVB, it has been replaced here by the term 'asset'.

**Component descriptor**
This descriptor is used to specify all streams that are attached to an asset. The descriptor may appear more than once in a loop since there may be more than one stream.

In the context of the AIT, this descriptor applies to VOD assets. Where the term 'event' is used by DVB, it has been replaced here by the term 'asset'.

### Content descriptor

This descriptor is used to classify the content of the asset. Only one content descriptor may appear in the loop, but there is the possibility to transmit more than one classification term because there is a loop within the descriptor. Transmission of this descriptor is optional.

In the context of the AIT, this descriptor applies to VOD assets. Where the term 'event' is used by DVB, it has been replaced here by the term 'asset'.

### Extended event descriptor

This descriptor is used to transmit a bigger amount of textual information for an asset than is possible with the short_event_descriptor. The information in extended event descriptors supplements that given in a short event descriptor. A language code is transmitted in order to indicate in which language the text is written. More than one extended_event_descriptor is allowed, for transmitting more data than one descriptor may contain (255 bytes excluding header) and for different languages.
Descriptors for the same language have to be grouped together, the last_descriptor field specifies the number of the last extended_event_descriptor for a specific language. Transmission of this descriptor is optional.

In the context of the AIT, this descriptor applies to VOD assets. Where the term 'event' is used by DVB, it has been replaced here by the term 'asset'. However, the original names of the extended_event_descriptor and short_event_descriptor have been retained, in order to reinforce the fact that they are not private descriptors.

### Multilingual component descriptor

This descriptor may be used to convey text describing a component of an asset in one or more languages. It may be included once in the descriptor loop for each component of an asset. Inclusion of this descriptor is optional.

In the context of the AIT, this descriptor applies to VOD assets. Where the term 'event' is used by DVB, it has been replaced here by the term 'asset'.

### Parental rating descriptor

This descriptor is used to give a rating of the asset based on age or other criteria that is used to prevent children from viewing unsuitable assets. The parental_rating_descriptor may appear just once in a loop. Transmission of this descriptor is optional. Country_codes relating to groups of countries may be used within the descriptor. If, as a result, there is more than one entry for a country in the descriptor, then the first entry in the descriptor which includes the country shall take precedence over any subsequent entry. For example, the following sequence of data within the descriptor would describe a parental rating of minimum age of 12 in all countries except UK, for which the minimum age is 18:
country_code = UK
rating = 0x0F
country_code = all countries
rating = 0x09

In the context of the AIT, this descriptor applies to VOD assets. Where the term 'programme' is used by DVB, it has been replaced here by the term 'asset'.

### Short event descriptor

This descriptor is used to transmit the name and a short text description for an asset. A language code is transmitted in order to indicate in which language the title and the text are written. Transmission of this descriptor is mandatory. This descriptor is allowed more than once in the loop for different languages. Thus it is not allowed to have more than one short_event_descriptor with the same language code.

In the context of the AIT, this descriptor applies to VOD assets. Where the term 'event' is used by DVB, it has been replaced here by the term 'asset'. However, the original names of the extended_event_descriptor and short_event_descriptor have been retained, in order to reinforce the fact that they are not private descriptors.

In addition to the above DVB SI descriptors, VOD specific, private descriptors can be optionally provided so that these additional private descriptors can provide more detailed information about a given asset than is possible to define using DVB specified descriptors. The private descriptors specified here are considered to be those which would be required in practice and the possibility of other private descriptors being carried is not excluded.

The following additional private descriptors can be provided:

### asset_url_descriptor

The asset_url_descriptor defines a unique url for a given asset. The asset url is tied to the asset_id, and gives the location of the asset on the VOD server. The asset URL is the preferred method for identifying a required asset to the VOD server. The url may be up to 4064 characters long, if segmented across multiple descriptors.

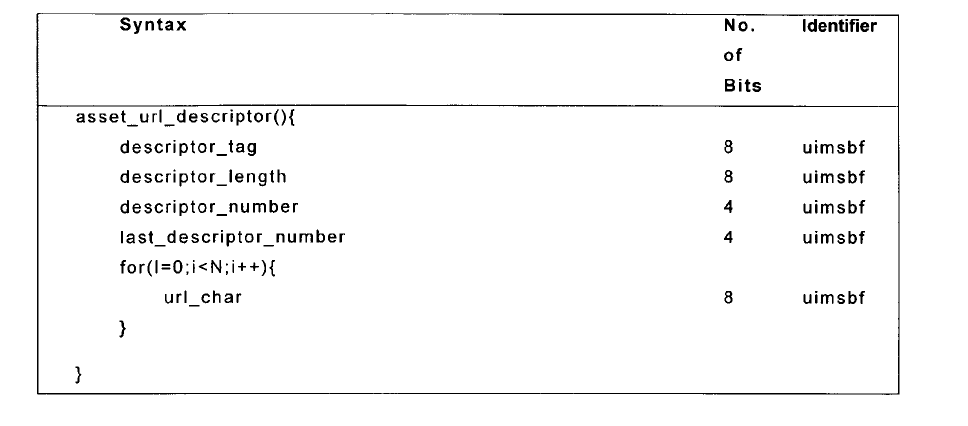

Semantics for the asset url descriptor:
**descriptor_tag:** This 8-bit field identifiers the descriptor as an asset_url_descriptor. The descriptor_tag field shall have a value of 0x90.
**descriptor_length:** This 8-bit field gives the length of the descriptor, beginning with the next field.
**descriptor_number:** This 4-bit field gives the number of the descriptor. It is used to associate information which cannot be fitted into a single descriptor. The descriptor_number of the first asset_url_descriptor of an associated set of asset_url_descriptors shal be "0x00". The descriptor_number shall be incremented by 1 with each additional asset_url_descriptor in this section.
**last_descriptor_number:** This 4-bit field specifies the number of the last asset_url_descriptor (that is the descriptor with the highest value of descriptor_number) of the associated set of descriptors of which this descriptor is part.
**url_char:** This is an 8-bit field. A string of "url_char" fields specifies the asset url.

### Asset_linkage_descriptor

The asset_linkage_descriptor defines a list of assets carrying related content. The first asset listed carries the full textual description of the related assets. It is possible to link up to 127 related assets.

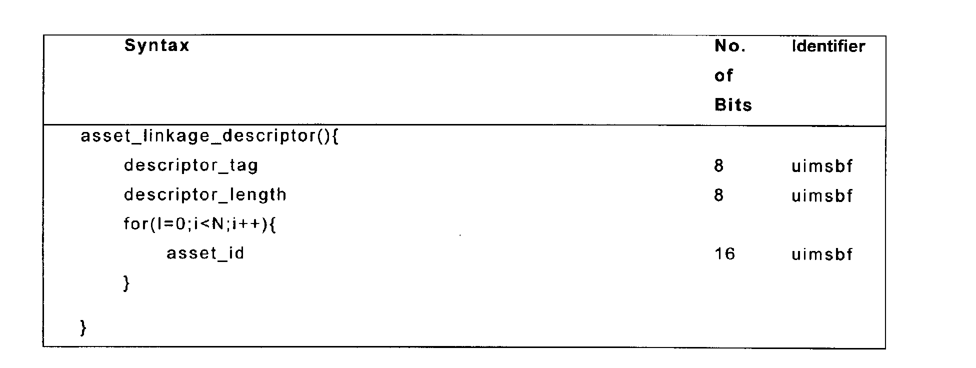

Semantics for the asset linkage descriptor:
**descriptor_tag:** This 8-bit field identifiers the descriptor as an asset_linkage_descriptor. The descriptor_tag field shall have a value of 0x91.
**descriptor_length:** This 8-bit field gives the length of the descriptor, beginning with the next field.
**asset_id:** This 16-bit field contains the identification number of a related asset.

### Entitlement_expiry_descriptor

The entitlement_expiry_descriptor defines a list of assets carrying related content. The first asset listed carries the full textual description of the related assets. It is possible to link up to 127 related assets.

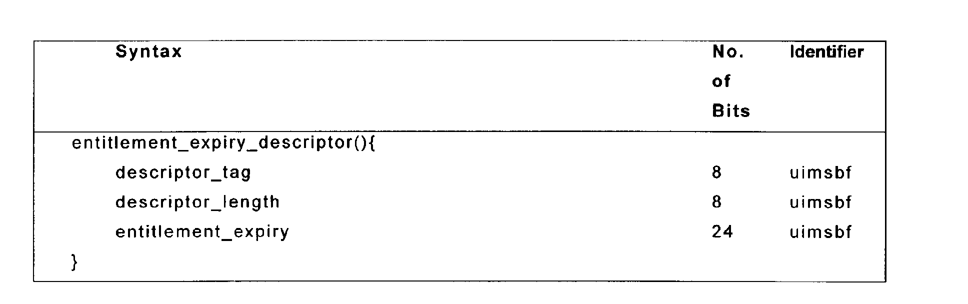

Semantics for the entitlement expiry descriptor:
**descriptor_tag:** This 8-bit field identifiers the descriptor as an asset_linkage_descriptor. The descriptor_tag field shall have a value of 0x92.
**descriptor_length:** This 8-bit field gives the length of the descriptor, beginning with the next field, and shall have a value of 3.
**entitlement_expiry:** This 24-bit field contains the time (daily) at which the entitlement for the asset ends in Universal Time, Coordinated (UTC). Format is 6 digits, 4-bit BCD = 24 bit.

### EXAMPLE: 01:45:30 is coded as "0x014530"

Thus it will be appreciated from the examples given which, it should be noted, do not restrict the possibility of variations and/or additional information from being provided as part of the system of the invention, that the system allows the identification and utilisation by the receiver apparatus of the broadcast data for VOD services, of assets relating to the data which the receiver requires and which can be utilised in the processing and generation of video and audio displays from said VOD data. Thus the data used to generate the information tables to describe specific VOD assets can be transmitted and linked together for reference in a format that is deliverable to the broadcast data receiver, in band, along with data already being transmitted for reception by the broadcast data receiver by means of extension to a DVB Service Information system in accordance with the invention.

## Claims

1. A system for use with broadcast data where at least a proportion of said data is selectively broadcast following a user selection at a broadcast data receiver, using a video on demand (VOD) system and **characterised in that** information relating to the assets of the VOD data is provided at the receiver for said VOD data in the form of at least one information table which is referred to by the receiver apparatus in the processing of said data to allow the display of the selected material to the user.

2. A system according to claim 1 wherein the assets of the VOD data are set out in two tables of information in the receiver, the first being an asset availability table (AAT) which specifies to the receiver processing the VOD data, assets which may be viewed on the network to which the user is a subscriber, and a second information table which is an asset information table (AIT) which provides to the receiver, information which defines and relates to those VOD assets which are indicated in the AAT table as being available.

3. A system according to claim 1 wherein the data for the tables is provided within the receiver memory.

4. A system according to claim 1 wherein information data for the tables is transmitted at intervals to the receiver.

5. A format and system for the broadcast of data which can be received by a broadcast data receiver and selectively processed to allow the generation of video and/or audio for viewing and/or listening by a user of the apparatus, said format allowing the description and allocation of assets relating to data known as VOD data and wherein the information relating to the assets of identifiable portions of the broadcast data is held in memory at the Broadcast Data Receiver with at least some of the data having been received along with the broadcast data and separated from the same and stored by the receiver for subsequent reference.

6. A format and system according to claim 5 wherein the asset data is stored in two information groups, a first group identifying which portions of the broadcast data is accessible for viewing and/or listening by a user in accordance with specific access controls for the specified user and a second group identifying assets of eth accessible data.

7. A format and system according to claim 5 wherein the asset data is transmitted to the Broadcast Data receiver as an extension to the transmission of data for a DVB (Digital Video Broadcast) Service Information.
